# EUROPÄISCHE PATENTANMELDUNG

(11) **EP 1 179 720 A2**
(43) Veröffentlichungstag der Anmeldung: **13.02.2002**
(21) Anmeldenummer: 01118612.9
(22) Anmeldetag: 02.08.2001
(51) Int. Cl.: F28D 1/053, B23K 11/00

(54) **Heizkörper, insbesondere Radiator, und Verfahren zu dessen Herstellung**

(30) Priorität: 12.08.2000 DE 10040138
(71) Anmelder: Oberle, Günter Werner, 77749 Niederschopfheim (DE)
(72) Erfinder: Oberle, Günter Werner, 77749 Niederschopfheim (DE)
(74) Vertreter: Rumrich, Gabriele

(57) **Zusammenfassung**

Heizkörper, insbesondere Radiator, und Verfahren zu dessen Herstellung, mit mehreren zueinander parallelen Radiatorgliedern (1.1-1.n), die im wesentlichen lamellenförmig in der Form eines einteiligen Flachovalrohres ausgebildet sind und im Querschnitt zwei zueinander parallele Seitenwände (1a,1b) aufweisen und miteinander verbunden sind, sowie mit Durchströmöffnungen (3.1) zum Durchströmen des Heizmediums und jeweils einem im oberen und im unteren Endbereich angeordneten durchgängigen Rohr (4) zur Zuführung des Heizmediums, welche die einzelnen Radiatorglieder (1.1-1.n) an ihren Endbereichen verbinden. Dabei sind jeweils am Endbereich eines Radiatorgliedes (1.1-1.n) in dessen beiden Seitenwänden, die rechtwinklig zur Wand liegen, sich gegenüberliegende erste und zweite Öffnungen (3.1,3.2) angeordnet. Das Rohr reicht von einer Öffnung eines Radiatorgliedes zur gegenüberliegenden Öffnung des sich anschließenden Radiatorgliedes, wobei die endseitigen Öffnungen des Rohres als Durchströmöffnungen (3.1,3.2) dienen.
Verfahrensgemäß wird bei noch endseitig offenen Profilen des Radiatorgliedes die Verbindung zwischen Rohr und Radiatorglied hergestellt und anschließend das Ende des Radiatorgliedes verschlossen.

## Beschreibung

Die Erfindung betrifft einen Heizkörper, insbesondere Radiator, und ein Verfahren zu dessen Herstellung nach den Oberbegriffen des ersten und sechsten Patentanspruchs, aus mehreren nebeneinander angeordneten und über ein Rohr verbundenen gleichartigen Radiatorgliedern, die lamellenförmig ausgebildet sind und insbesondere ein flachrechteckiges Profil oder ein flachovales Profil aufweisen. Aus GB 1 256 228 ist bereits ein Verfahren zur Herstellung von Heizkörpern bekannt, bei welchem zwei schalenförmige Blechteile mit Flansch und Bohrung, wobei bei einem Blechteil der Flansch größer ist, über ein Rohr mit beidseitigem Flansch, an den Bohrungen miteinander verbunden werden. Das Anschweißen des Flansches des Rohres erfolgt zwischen zwei rückseitig zueinander angeordneten Halbschalen nebeneinander liegender Radiatorglieder. Anschließend erfolgt das Verbinden der beiden Halbschalen über deren gesamten Umfang durch Umbördeln des größeren Flansches über den kleineren Flansch. Nachteilig ist dabei die zweiteilige Ausbildung der einzelnen Radiatorglieder sowie der Flansch an den Rohren.

Alternativ ist seit langem bekannt, die einzelnen Radiatorglieder auch einteilig herzustellen, nämlich aus Flachovalrohr. Diese werden beispielsweise im Prospekt: Zehnder, formschöne Wärmekörper, Ausgabe 2000 gezeigt. Generell sind die Radiatorglieder bei einreihiger Ausführung jeweils an ihren Enden über wandseitige Rohre miteinander verbunden. Dadurch, dass die Rohre an den schmalen Seiten der Radiatorglieder befestigt werden, sind die Durchströmöffnungen zwischen Rohr und dem jeweiligen Radiatorglied sehr klein, wodurch ein hoher Strömungswiderstand verbunden mit ungünstigen hydrodynamischen Eigenschaften des Heizmediums zu verzeichnen ist. Durch die wandseitige Anbringung der Rohre ergibt sich weiterhin ein großer Wandabstand. Die Verbindung zwischen den beidseitig geschlossenen Radiatorgliedern und den Rohren wird durch Schweißen oder Löten hergestellt, wobei aufgrund der Befestigung der Radiatorglieder an ihrer flachen gebogenen Stirnseite Probleme bei deren Herstellung auftreten können.

Der Erfindung liegt die Aufgabe zugrunde, einen gattungsgemäßen Radiator mit Radiatorgliedern aus Flachovalrohr zu schaffen, der sowohl mit einer hohen Qualität als auch mit einer großen Effektivität herstellbar ist und welcher gute hydrodynamische Eigenschaften aufweist und einen geringen Wandabstand ermöglicht.

Diese Aufgabe wird erfindungsgemäß durch die Merkmale der Patentansprüche 1. und 6. gelöst. Vorteilhafte Weiterbildungen ergeben sich aus den Unteransprüchen.

Der Heizkörper, ist in Form eines Radiators ausgebildet und besteht aus mehreren zueinander parallelen Radiatorgliedern, die im wesentlichen lamellenförmig ausgebildet sind und im Querschnitt zwei zueinander parallele Seitenwände aufweisen, die im längs an einer Wand montierten Zustand rechtwinklig zu Wand liegen. Diese beiden Seitenwände werden über dazu rechtwinklige gerade Seitenwände miteinander verbunden, so dass ein flachrechteckiges Profil gebildet wird, oder über Radien, so dass ein flachovales Profil gebildet wird. Weiterhin weist der Heizkörper Durchströmöffnungen zum Durchströmen des Heizmediums und jeweils ein im oberen und im unteren Endbereich angeordnetes Rohr zur Zuführung des Heizmediums auf. Die beiden Rohre verbinden die einzelnen Radiatorglieder an ihren Endbereichen. Erfindungsgemäß sind jeweils am Endbereich eines Radiatorgliedes in dessen beiden Seitenwänden, die bei Wandmontage rechtwinklig zur Wand liegen, sich gegenüberliegende erste und zweite Öffnungen angeordnet. Das Rohr reicht dabei von einer Öffnung eines Radiatorgliedes zur gegenüberliegenden Öffnung des sich anschließenden Radiatorgliedes. Das Rohr kann als Rohrabschnitt ausgebildet und beidseitig offen sein. Es reicht in diesem Fall von einer Seite des Radiatorgliedes zur gegenüberliegenden Seite des sich anschließenden Radiatorgliedes, wobei die Öffnungen des Radiatorgliedes und die endseitigen Öffnungen des Rohrabschnittes als Durchströmöffnungen dienen.

Alternativ kann sich das Rohr auch über die gesamte Länge des Heizkörpers erstrecken. Die Radiatorglieder sind in diesem Fall mit ihren Öffnungen auf das Rohr aufgesteckt und das Rohr weist umfangsseitige als Durchströmöffnung dienende Bohrungen auf, die jeweils im Innenbereich eines jeden Radiatorgliedes liegen.

Verfahrensgemäß werden die Rohrabschnitte bei noch endseitig offenen Profilen des Radiatorgliedes befestigt und erst anschließend das Ende des Radiatorgliedes verschlossen. Die Verbindung zwischen Radiatorglied und Rohr ist dabei vorzugsweise als stoffschlüssige Verbindung ausgebildet. Erfolgt das Herstellen der Verbindung durch Widerstandsschweißen greift dabei die Elektrode in das offene Ende des Radiatorgliedes ein.

Zur Aufnahme des Anpressdruckes beim Widerstandsschweißen greift durch die dem Rohrabschnitt gegenüberliegende Öffnung ein Gegenhalter ein. Nach Beendigung des Widerstandsschweißens werden Elektrode und Gegenhalter aus dem Radiatorglied entfernt und das noch offene Ende verschlossen, z.B. durch Einrollen und anschließendes Verschweißen.

Es ist auch möglich, an der Schweißposition im Radiatorglied einen Stützring anzuordnen, der den Stromfluß zwischen zwei außen am Radiatorglied angreifenden Elektroden gewährleistet. In diesem Fall kann das Verschließen der Radiatorglieder auch vor dem Anschweißen der Rohrabschnitte erfolgen.

Bei einem Rohr in Länge des Heizkörpers werden die Radiatorglieder mit Ihren Öffnungen auf das Rohr gesteckt, welches umfangsseitige als Durchströmöffnung dienende Bohrungen aufweist, die jeweils im Innenbereich eines jeden Radiatorgliedes liegen. Anschließend werden die Radiatorglieder mit dem Rohr stoffschlüssig und/oder form- und kraftschlüssig verbunden. Die Radiatorglieder können dabei an Ihren Enden bereits geschlossen sein oder auch erst nach dem Fügen geschlossen werden. Die stoffschlüssige Verbindung wird vorzugsweise durch Schweißen oder Löten, insbesondere durch Laserschweißen hergestellt.

Die Heizleistung des Radiatorelementes wird durch dessen maximal mögliche Oberfläche begrenzt. Dabei begrenzt die Druckstabilität des Radiatorgliedes dessen Breite, denn der Innendruck durch das Heizmedium entspricht dem Systemdruck der Heizanlage. Um die Heizleistung zu erhöhen, muß die Breite des Radiatorgliedes erhöht werden. Zur Verdopplung der Heizleistung eines etwa 75mm breiten Flachovalrohres muss dessen Breite auf etwa 120mm erhöht werden. Um dabei eine erhöhte Stabilität des Heizkörpers zu gewährleisten und ein Aufbauchen des Radiatorgliedes durch den Druck des Heizmediums zu verhindern, ist es möglich, in das Radiatorglied einen stabilisierenden Steg einzuschieben, der mit den breiteren Längsseiten mittig verschweißt ist, vorzugsweise durch Buckelschweißen.

Mit der Erfindung wird ein Radiator geschaffen, der nahe der Wand angebracht werden kann. Das Herstellungsverfahren wird wesentlich vereinfacht und die Qualität erhöht. Die großen Durchströmöffnungen verringern den Widerstand beim Durchströmen des Heizmediums und gewährleisten somit gute hydrodynamische Eigenschaften.

Die Erfindung wird nachfolgend anhand von Ausführungsbeispielen und zugehörigen Zeichnungen näher erläutert.

Es zeigen:
- Fig. 1:: einreihiger Radiator mit endseitig zwischengeschweißten Rohrabschnitten,
a: in Vorderansicht,
b: in Schnittdarstellung A-A
c: in Schnittdarstellung B-B
- Fig. 2:: einreihiger Radiator mit endseitig durchgängigen Rohren, in Schnittdarstellung B-B
- Fig. 3:: Widerstandsschweißen eines Rohrabschnittes
a: während des Schweißens mit geöffnetem Radiatorglied,
b: nach dem Schweißen und dem Schließen des Radiatorgliedes,
- Fig. 4:: Stützring 10,
- Fig. 5:: Widerstandsschweißen eines Rohrabschnittes mit Stützring,
- Fig. 6:: Seitenansicht eines Radiatorgliedes mit eingeschweißtem Steg,
- Fig. 7:: Schnitt C-C durch den Steg,
- Fig. 8:: Steg mit Schweißbuckeln an den Stirnseiten.

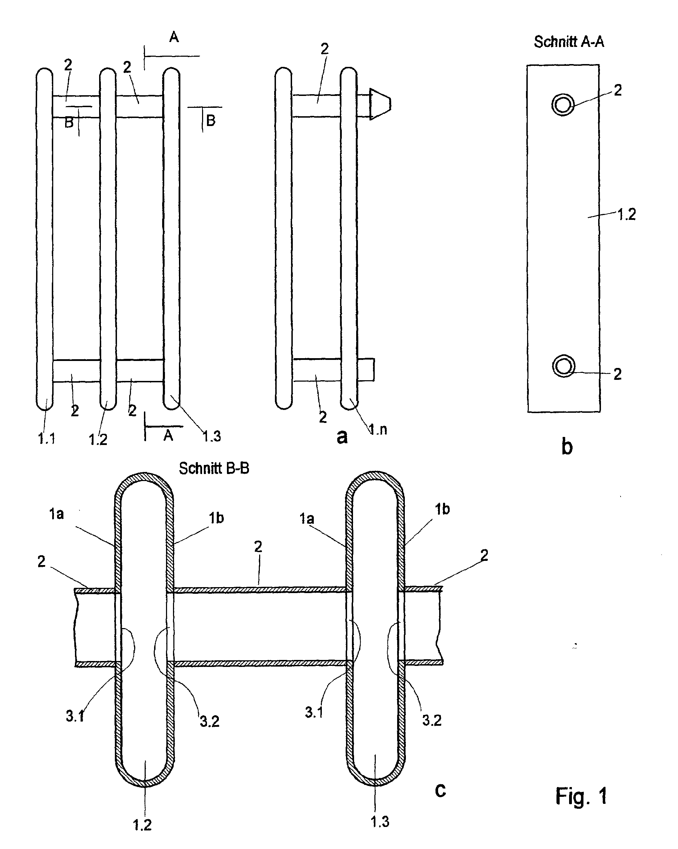

Fig. 1 zeigt einen Radiator mit mehreren gleichartigen aneinander über Rohrstutzen 2 befestigten Radiatorgliedern 1.1, 1.2, 1.3 bis 1.n, a in der Vorderansicht, b in der Schnittdarstellung A-A und c in einer vergrößerten Schnittdarstellung B-B. Die Radiatorglieder 1.1, 1.2, 1.3 bis 1.n sind an ihren beiden Enden über Rohrabschnitte 2 verbunden.

Jeder Rohrabschnitt 2 wurde durch Widerstandsschweißen mit dem jeweiligen Radiatorglied verbunden. Jedes Radiatorglied weist an seinen zueinander parallelen Seitenflächen 1a, 1b einen ersten Durchbruch 3.1 und einen gegenüberliegenden zweiten Durchbruch 3.2 auf. Die Durchbrüche 3.1 und die Endseitigen Öffnungen der Rohrabschnitte 2 dienen als Durchströmöffnungen.

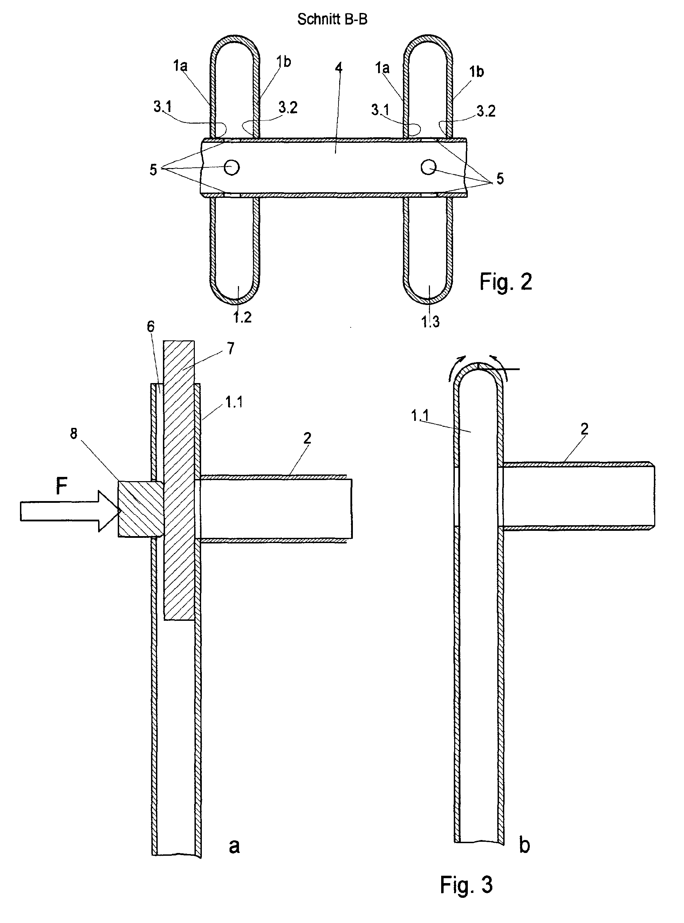

In Fig. 2 wird ein Radiator in einer Schnittdarstellung B-B gem. Fig. 1 dargestellt, bei weichem jedoch ein durchgängiges Rohr 4 als Wasserführung dient, auf welches die Radiatorglieder mit ihren Durchbrüchen 3.1, 3.2 aufgeschoben wurden. Das Rohr 4 weist radiale Öffnungen 5 auf, die in den Radiatorgliedern liegen.

Das Schweißen eines noch endseitig geöffneten Radiatorgliedes zeigt Fig. 3a und das geschlossene Radiatorglied 3b. Gem. Fig. 3a wurde durch die endseitige Öffnung 6 des Radiatorgliedes eine Elektrode 7 eingebracht. An der Seite 1a liegt im Bereich der zweiten Öffnung 2b der Rohrabschnitt 4 an. Gegen die Elektrode 7 drückt von der anderen Seite ein durch die erste Öffnung 1a reichender Gegenhalter 8 mit der Kraft F. Nach dem Widerstandsschweißen werden die Elektrode 7 und der Gegenhalter 8 aus dem Radiatorglied entfernt und nachfolgend die endseitige Öffnung 6 des Radiatorgliedes eingerollt und verschweißt (Fig. 3b). Die Schweißnaht 9 befindet sich auf der Ober- bzw. Unterseite des Radiatorgliedes.

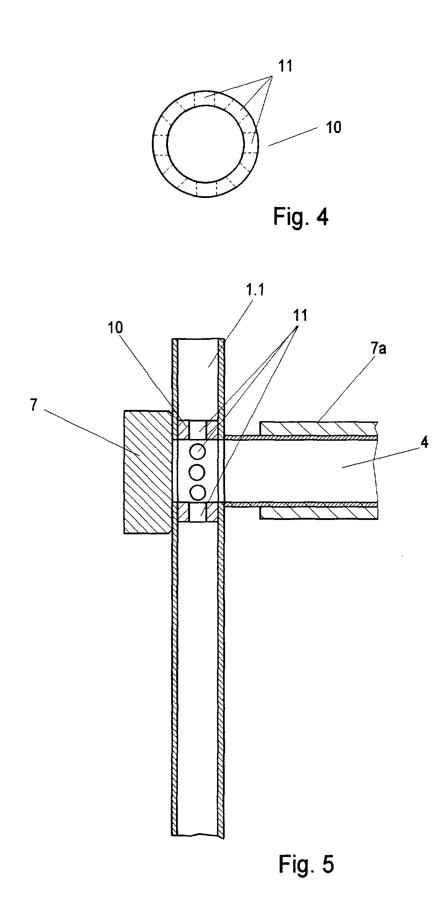

Es ist auch möglich, den Rohrabschnitt 4 ohne das Eingreifen einer Elektrode 7 in das Radiatorglied durchzuführen. Dazu ist in das Radiatorglied in Schweißposition ein Stützring 10 einzulegen, der in Fig. 4 dargestellt ist. Der Stützring weist mehrere radiale Bohrungen 11 auf, um das Durchströmen des Heizmediums zu gewährleisten. Beim Widerstandsschweißen (Fig. 5) liegt die Elektrode 7 an einer Seite des Radiatorgliedes an. An der gegenüberliegenden Seite wird der Rohrabschnitt 2 positioniert und von einer zweiten Elektrode 7.a kontaktiert. Im Radiatorglied 1.1 befindet sich der Stützring 10. Beim Schweißen erfolgt der Stromfluß von der Elektrode 7 über die Rohrwandung der Seite 1a, den Stützring 10, die Seite 1b, den Rohrabschnitt 2 zur zweiten Elektrode 7a oder umgekehrt.

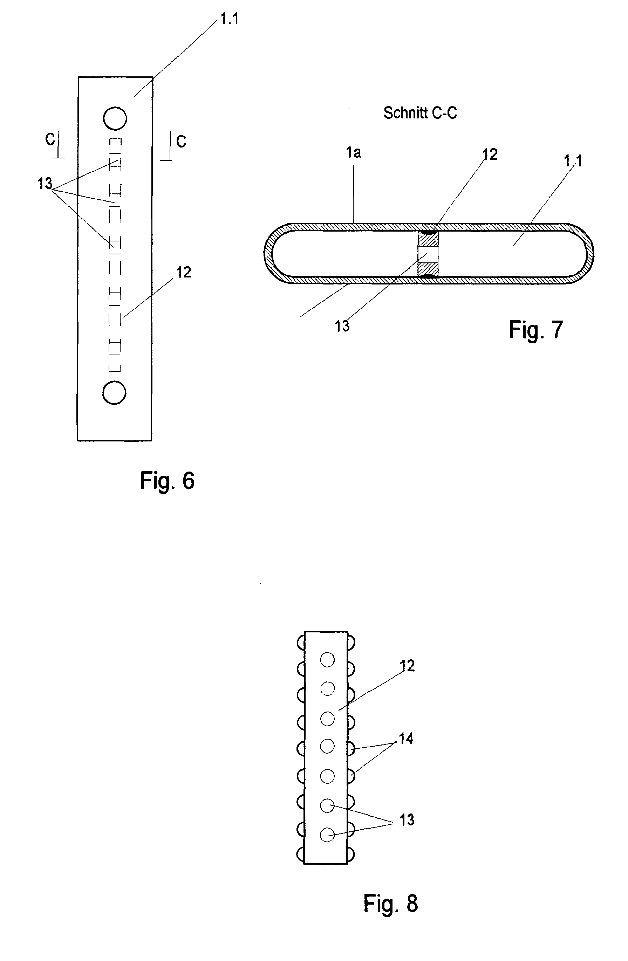

In Fig. 6 ist die Seitenansicht eines Radiatorgliedes 1.1 mit eingeschweißtem Steg 12 dargestellt. Der Steg 12 liegt dabei mit seinen beiden schmaleren Längsseiten innen an den breiten Seiten 1a, 1b des Radiatorgliedes 1.1 an und ist mit diesen verschweißt. Um das Durchströmen des Heizmediums zu gewährleisten, weist der Steg 12 eine Vielzahl von Durchbrüchen 13 auf.

Den Schnitt C-C gem. Fig. 6 zeigt Fig. 7. Die Breite b des Steges 12 entspricht dabei dem Abstand X der beiden Seiten 1a, 1b.

Der Steg 12 weist an seinen Stirnseiten, die mit dem Radiatorglied 1.1 verschweißt werden, Schweißbuckel 12 auf (Fig. 8). Auch hier sind die Durchbrüche 13 zu erkennen.

## Patentansprüche

1. Heizkörper, insbesondere Radiator, mit mehreren zueinander parallelen Radiatorgliedern, die im wesentlichen lamellenförmig in der Form eines einteiligen Flachovalrohres ausgebildet sind und im Querschnitt zwei zueinander parallele Seitenwände aufweisen, und miteinander verbunden sind, sowie mit Durchströmöffnungen zum Durchströmen des Heizmediums und jeweils einem im oberen und im unteren Endbereich angeordnetem durchgängigem Rohr zur Zuführung des Heizmediums, welche die einzelnen Radiatorglieder an ihren Endbereichen verbinden, wobei jeweils am Endbereich eines Radiatorgliedes in dessen beiden Seitenwänden, die rechtwinklig zur Wand liegen, sich gegenüberliegende erste und zweite Öffnungen angeordnet sind und daß das Rohr von einer Öffnung eines Radiatorgliedes zur gegenüberliegenden Öffnung des sich anschließenden Radiatorgliedes reicht, wobei die endseitigen Öffnungen des Rohres als Durchströmöffnungen dienen.

2. Heizkörper nach Anspruch 1, **dadurch gekennzeichnet, daß** im Bereich der sich gegenüberliegenden Durchströmöffnungen eines Radiatorgliedes ein Stützring mit radialen Durchgangsbohrungen angeordnet ist.

3. Heizkörper nach Anspruch 1 oder 2, **dadurch gekennzeichnet, daß** sich längserstreckend im Radiatorglied ein Steg angeordnet ist, der mit den breiteren sich gegenüberliegenden Längsseiten des Radiatorgliedes verbunden ist.

4. Heizkörper nach Anspruch 3, **dadurch gekennzeichnet, daß** der Steg mit dem Radiatorglied verschweißt ist.

5. Heizkörper nach Anspruch 4, **dadurch gekennzeichnet, daß** der Steg mit dem Radiatorglied durch Buckelschweißen verbunden ist.

6. Verfahren zur Herstellung eines Heizkörpers, insbesondere Radiators, mit mehreren zueinander parallelen Radiatorgliedern, die im wesentlichen lamellenförmig in der Form eines einteiligen Flachovalrohres ausgebildet und miteinander verbunden sind, sowie mit Durchströmöffnungen zum Durchströmen des Heizmediums und wenigstens einem im oberen und im unteren Endbereich angeordnetem Rohr zur Zuführung des Heizmediums, welches die einzelnen Radiatorglieder an ihren Endbereichen verbindet, wobei bei noch endseitig offenen Profilen des Radiatorgliedes die Verbindung zwischen Rohr und Radiatorglied hergestellt wird und anschließend das Ende des Radiatorgliedes verschlossen wird, wobei an einer Öffnung des Radiatorgliedes der Rohrabschnitt anliegt und in das offene auf dieser Seite liegende Ende des Radiatorgliedes eine Elektrode eingeführt wird und zwischen Radiatorglied und Rohrabschnitt eine stoffschlüssige Verbindung durch Widerstandsschweißen erzeugt wird, und daß anschließend das Ende des Radiatorgliedes nach Entnehmen der Elektrode verschlossen wird.

7. Verfahren nach Anspruch 6, **dadurch gekennzeichnet, daß** der beim Widerstandsschweißen erforderliche Druck über einen, durch die gegenüberliegende Öffnung des Radiatorgliedes reichenden, Gegenhalter aufgenommen wird.
